(19) **Europäisches Patentamt**
**European Patent Office**
**Office européen des brevets**

(11) **EP 3 840 965 B1**

(12) **EUROPÄISCHE PATENTSCHRIFT**

(45) Veröffentlichungstag und Bekanntmachung des Hinweises auf die Patenterteilung:
**24.04.2024 Patentblatt 2024/17**

(21) Anmeldenummer: **19752114.9**

(22) Anmeldetag: **22.07.2019**

(51) Internationale Patentklassifikation (IPC):
**G01C 22/00** *(2006.01)* **B60C 23/04** *(2006.01)*
**G01C 22/02** *(2006.01)*

(52) Gemeinsame Patentklassifikation (CPC):
**B60C 23/0493; B60C 23/0489; G01C 22/02**

(86) Internationale Anmeldenummer:
**PCT/EP2019/069642**

(87) Internationale Veröffentlichungsnummer:
**WO 2020/038675 (27.02.2020 Gazette 2020/09)**

(54) **MESSVORRICHTUNG, VORRICHTUNG, SYSTEM, FAHRZEUG UND VERFAHREN**

MEASURING DEVICE, DEVICE, SYSTEM, VEHICLE AND METHOD

DISPOSITIF DE MESURE, DISPOSITIF, SYSTÈME, VÉHICULE ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2018 DE 102018214154**

(43) Veröffentlichungstag der Anmeldung:
**30.06.2021 Patentblatt 2021/26**

(73) Patentinhaber: **Continental Reifen Deutschland GmbH**
**30175 Hannover (DE)**

(72) Erfinder:
 • **CYLLIK, Adrian**
 **30165 Hannover (DE)**
 • **LEHMANN, Jörg**
 **30165 Hannover (DE)**
 • **LANGE, Bernd**
 **30165 Hannover (DE)**

(74) Vertreter: **Continental Corporation**
**c/o Continental AG**
**Intellectual Property**
**Postfach 169**
**30001 Hannover (DE)**

(56) Entgegenhaltungen:
**WO-A1-2012/020166     US-A1- 2007 182 531**
**US-A1- 2013 166 140     US-A1- 2014 107 946**

EP 3 840 965 B1

**Beschreibung**

Die Erfindung betrifft eine Messvorrichtung, eine Vorrichtung, ein System, ein Fahrzeug sowie ein Verfahren.

Aus dem Stand der Technik ist es bekannt, eine Messvorrichtung an einem Fahrzeugrad, insbesondere an der zugehörigen Felge, zu befestigen, wobei mittels der Messvorrichtung die tatsächliche zurückgelegte Reifenlaufstrecke des Rads ermittelt wird. Derartige Messvorrichtungen haben aber den Nachteil, dass sie nachträglich an dem Rad zu befestigen sind. Durch diese Befestigung entstehen zusätzliche Kosten, die jedoch zu vermeiden sind.

In der US 2014107946 A1 werden eine Vorrichtung und ein Verfahren zur Bestimmung eines Kilometerstandes und eines Abriebs eines Reifens offenbart.

In der US 20070182531 A1 wird ein Verfahren zum Bestimmen und Speichern von Reifendaten eines Motorfahrzeugs offenbart.

In der US 20130166140 A1 wird eine Vorrichtung und eine Methode dargestellt zur Bestimmung eines Reifendruckes.

In der WO 2012020166 A1 wird ein Überwachungssystem vorgestellt, wobei das Überwachungssystem zum Überwachen von Fahrzeugrädern eingerichtet ist.

Der Erfindung liegt die Aufgabe zugrunde, eine technische Lösung bereitzustellen, die es ermöglicht, die Reifenlaufstrecke eines verformbaren Fahrzeugreifens mit möglichst geringem zusätzlichem Aufwand und/oder mit möglichst geringen Zusatzkosten zu gewährleisten.

Gemäß einem ersten Aspekt der Erfindung wird die Aufgabe gelöst durch eine Messvorrichtung mit den Merkmalen des Anspruchs 1.

Die zuvor genannte Messvorrichtung bietet den Vorteil, dass die Messvorrichtung in eine bereits oftmals vorhandene Messvorrichtung eines Fahrzeugreifens integriert werden kann. Moderne Fahrzeugreifen sind nämlich oftmals mit Messvorrichtungen ausgestattet, die die Temperatur des Fahrzeugreifens und/oder den Innendruck des Reifens messen, und die entsprechenden Messdaten gegebenenfalls mittels einer Datenverarbeitungseinheit verarbeiten und zusätzlich mit einer Funkeinheit, beispielsweise an einen Empfänger im Fahrzeug senden. Die zuvor genannte erfindungsgemäße Messvorrichtung kann deshalb durch eine Anpassung der bekannten Messvorrichtung des Fahrzeugreifens hergestellt werden, wobei jedoch eine zusätzliche Sensoreinheit vorzusehen ist, die innenseitig an dem Fahrzeuggreifen befestigt werden kann, um die Radialbeschleunigung zu erfassen. Diese Sensoreinheit kann in einer vorteilhaften Ausgestaltung auch mit den bereits vorhandenen Sensoren kombiniert und/oder integriert ausgebildet sein. Darüber hinaus kann die erste Datenverarbeitungseinheit von der bereits bekannten Datenverarbeitungseinheit gebildet werden, wenn diese gemäß der Vorgabe der ersten Datenverarbeitungseinheit nachträglich dazu konfiguriert wird, den Ergebniswert zu ermitteln.

Der Ergebniswert kann für die tatsächliche Berechnung der Reifenlaufstrecke des Fahrzeugreifens relevant und/oder notwendig sein. Der Ergebniswert kann beispielsweise eine Reifenwinkelgeschwindigkeit des Fahrzeugreifens, eine translatorische Reifengeschwindigkeit des Fahrzeugreifens oder eine Messstrecke des Fahrzeugreifens. Der Ergebniswert kann aber auch eine Reifenlaufstrecke des Fahrzeugreifens sein.

Mittels der ersten Funkeinheit kann ein Funksignal versendet werden, das den ermittelten Ergebniswert repräsentiert. Das Funksignal kann beispielsweise an eine stationäre Vorrichtung gesendet werden, die einen Empfänger zum Empfang des Funksignals aufweist. Es ist aber auch möglich, dass das Funksignal von der ersten Funkeinheit an einen Empfänger eines Fahrzeugs gesendet wird, an dem der Fahrzeugreifen verwendet wird.

Die zuvor erläuterte Messvorrichtung bietet deshalb den Vorteil, dass diese mit besonders geringem Aufwand an einem formbaren Fahrzeugreifen vorgesehen werden kann, sodass eine Reifenlaufstrecke für den Fahrzeugreifen basierend auf dem ermittelten Ergebniswert direkt oder indirekt berechnet werden kann.

Eine vorteilhafte Ausgestaltung der Messvorrichtung zeichnet sich dadurch aus, dass mindestens einer der folgenden Parameter einen Reifenparameter bzw. einen der Reifenparameter bildet: dynamischer Rollradius des Fahrzeugreifens, normierter Rollradius des Fahrzeugreifens, radialer Abstand der Sensoreinheit von einer Drehachse des Fahrzeugreifens, normierter radialer Abstand der Sensoreinheit von der Drehachse des Fahrzeugreifens, Abtastrate der Sensoreinheit, Periodendauer der Sensoreinheit, und vorbestimmter Korrekturfaktor für den Fahrzeugreifen. Jeder der genannten Parameter kann eine Eigenschaft des Fahrzeugreifens charakterisieren. Deshalb kann einer der zuvor genannten Parameter oder mehrere der zuvor genannten Parameter jeweils als Reifenparameter verwendet werden, um den Ergebniswert mittels der ersten Datenverarbeitungseinheit der Messvorrichtung und basierend auf der erfassten Radialbeschleunigung sowie dem zuvor genannten mindestens einen Parameter zu ermitteln.

Eine weitere vorteilhafte Ausgestaltung der Messvorrichtung zeichnet sich dadurch aus, dass die Sensoreinheit zur Erfassung der Radialbeschleunigung mit einer Abtastrate von höchstens 1/8 Hz, 1/32 Hz, 1/64 Hz oder 1/128 Hz ausgebildet ist. Besonders bevorzugt beträgt die Abtastrate höchstens 1/16 Hz. Beträgt die Abtastrate 1/16 Hz, so wird die Radialbeschleunigung mittels der Sensoreinheit alle 16 Sekunden gemessen. Die Periodendauer ist umgekehrt proportional zur Abtastrate. Die Periodendauer ist vorzugsweise größer als 8 Sekunden, 16, Sekunden, 32 Sekunden, 64 Sekunden oder 128 Sekunden. Damit kann besonders effektiv gewährleistet werden, dass die Erfassung der Radialbeschleunigung eine besonders geringe elektrische Leistung benötigt. Die Messvorrichtung ist deshalb besonders sparsam.

Eine weitere vorteilhafte Ausgestaltung der Messvorrichtung zeichnet sich dadurch aus, dass der Ergebniswert eine Reifenwinkelgeschwindigkeit des Fahrzeugreifens ist, wobei der oder einer der Reifenparameter von dem normierten radialen Abstand der Sensoreinheit von der Drehachse des Fahrzeugreifens gebildet ist. Die Ermittlung der Reifenwinkelgeschwindigkeit $\omega$ kann dabei basierend auf der folgenden mathematischen Formel erfolgen:

$$\omega = \sqrt{\frac{a_{r,i}}{r_{sen}^{norm}}}$$

Der Parameter $a_{r,i}$ repräsentiert dabei die Radialbeschleunigung. Der Parameter $r_{sen}^{norm}$ repräsentiert dabei den normierten Abstand der Sensoreinheit von der Drehachse des Fahrzeugreifens.

Eine weitere vorteilhafte Ausgestaltung der Messvorrichtung zeichnet sich dadurch aus, dass der Ergebniswert eine translatorische Reifengeschwindigkeit des Fahrzeugs ist, wobei die Reifenparameter zumindest von den normierten radialen Abstand der Sensoreinheit von der Drehachse des Fahrzeugreifens und von dem normierten Rollradius des Fahrzeugreifens gebildet sind. Dabei kann die Ermittlung der translatorischen Reifengeschwindigkeit $v_w$ beispielsweise basierend auf der folgenden mathematischen Formel folgen:

$$v_w = \omega \cdot r_{dyn}^{norm}$$

$\omega$ repräsentiert dabei die Reifenwinkelgeschwindigkeit. Diese kann basierend auf der zuvor erläuterten Formel ermittelt werden. $r_{dyn}^{norm}$ repräsentiert dabei den normierten Rollradius des Fahrzeugreifens.

Eine weitere vorteilhafte Ausgestaltung der Messvorrichtung zeichnet sich dadurch aus, dass der Ergebniswert eine Messstrecke des Fahrzeugreifens ist, wobei die Reifenparameter zumindest von dem normierten radialen Abstand der Sensoreinheit von der Drehachse des Fahrzeugreifens und von dem normierten Rollradius des Fahrzeugreifens gebildet sind. Die Ermittlung der normalisierten Messstrecke kann dabei auf eine Strecke zwischen einem ersten Messpunkt ($t_{i-1}$) und einem zweiten Messpunkt ($t_j$) bezeichnen. Die Messstrecke $\Delta s_i$ kann basierend auf der folgenden mathematischen Formel ermittelt werden:

$$\Delta s_i = v_w \cdot \Delta t_i \quad = \frac{r_{dyn}^{norm}}{\sqrt{r_{sen}^{norm}}} \cdot \sqrt{a_{r,i}} \cdot \Delta t_i$$

Die normalisierte Messstrecke wird dabei durch $\Delta s_i$ repräsentiert. Die Zeit zwischen beiden Messpunkten wird als $\Delta t_i$ bezeichnet. Bezüglich der darüber hinaus verwendeten Parameter wird auf die vorangegangenen Erläuterungen Bezug genommen.

Die Ermittlung einer reifenunabhängigen Messstrecke kann basierend auf der folgenden mathematischen Formel mittels der Datenverarbeitungseinheit erfolgen:

$$mileage_{FP}^{norm} = \sum_i s_i = \frac{r_{dyn}^{norm}}{\sqrt{r_{sen}^{norm}}} \cdot \sum_i \left( \sqrt{a_{r,i}} \cdot \Delta t_i \right)$$

Dabei wird die reifenunabhängige Messstrecke durch $mileage_{FP}^{norm}$ repräsentiert. Bezüglich der weiteren mathematischen Parameter wird auf die vorangegangenen Erläuterungen Bezug genommen. Als ein weiterer Reifenparameter für die Ermittlung der Messstrecke kann außerdem die Abtastrate oder die Periodendauer berücksichtigt werden bzw. die Ermittlung darauf basiert sein.

Eine vorteilhafte Ausgestaltung der Messvorrichtung zeichnet sich dadurch aus, dass der Ergebniswert eine Reifenlaufstrecke des Fahrzeugreifens ist, wobei die Reifenparameter zumindest von dem normierten radialen Abstand der Sensoreinheit von der Drehachse des Fahrzeugreifens, von dem normierten Rollradius des Fahrzeugreifens und von einem vorbestimmten Korrekturfaktor für den Fahrzeugreifens gebildet sind, wobei der Korrekturfaktor auf einer vorbestimmten Abweichung der von der Sensoreinheit erfassten Radialbeschleunigung basiert. Die Reifenlaufstrecke ist vorzugsweise die von dem Fahrzeugreifen durch Abrollen abgelaufene Strecke. Die Reifenlaufstrecke kann auch als Laufleistung bezeichnet sein. Beim Abrollen des Reifens kommt es im Latsch-Bereich des Fahrzeugreifens zu einer Verformung. Dies beeinflusst die Fassung der Radialbeschleunigung. Insbesondere wenn die Sensoreinheit an der Reifeninnenseite gegenüber dem Latsch-Bereich des Fahrzeugreifens ist, wird von der Sensoreinheit eine Radialbeschleunigung erfasst, die in etwa Null beträgt. Dies entspricht jedoch nicht der mittleren radialen Beschleunigung des Fahrzeugreifens. Die Erfassung der Radialbeschleunigung im Latsch-Bereich führt also zu einer nachteiligen Beeinflussung der Ermittlung der Reifenlaufstrecke. Um diese nachteilige Beeinflussung zu korrigieren, wird für die Ermittlung der Reifenlaufstrecke der Korrekturfaktor berücksichtigt. Dieser kann durch statistische Ermittlungen vorbestimmt sein. Die Ermittlung der Reifenlaufstrecke kann deshalb basieren auf der folgenden mathematischen Formel mittels der Datenverarbeitungseinheit erfolgen:

$$mileage_{corr}^{norm} = mileage_{FP}^{norm} \cdot f_{FP}(T_s)$$

Die Reifenlaufstrecke wird dabei durch $mileage_{corr}^{norm}$ repräsentiert. Die reifenunabhängige Messstrecke wird dabei durch $mileage_{FP}^{norm}$ repräsentiert und kann entsprechend der zuvor genannten Erläuterungen ermittelt werden. Der Korrekturfaktor $f_{FP}$ dient zur Korrektur des bei der Erfassung der Radialbeschleunigung entstehenden Latsch-Fehlers.

Eine vorteilhafte Ausgestaltung der Messvorrichtung zeichnet sich dadurch aus, dass die Ermittlung einer normierten Reifenlaufstrecke als Ergebniswert, insbesondere basierend auf der folgenden mathematischen Formel, die mittels der Datenverarbeitungseinheit ausgeführt werden kann:

$$mileage = mileage_{corr}^{norm} \cdot \frac{f_{dyn}^{tire}}{\sqrt{f_{sen}^{tire}}}$$

Der Faktor $f_{dyn}^{tire}$ ist ein auf dem dynamischen Rollradius basierender Faktor. $f_{sen}^{tire}$ ist ein auf dem Radius des Sensors basierender Faktor.

Eine weitere vorteilhafte Ausgestaltung der Messvorrichtung zeichnet sich dadurch aus, dass sich die erfasste Radialbeschleunigung auf eine mittlere, in Radialrichtung auf die Lauffläche wirkende Beschleunigung bezieht, wobei der Korrekturfaktor auf der zufälligen Abweichung der erfassten Radialbeschleunigung von einer tatsächlichen, mittleren, in Radialrichtung auf die Lauffläche wirkenden Beschleunigung basiert, und wobei die Abweichung auftritt, wenn die Sensoreinheit bei der Erfassung der Radialbeschleunigung innenseitig gegenüberliegend zu einem Aufstandsflächenabschnitt des Fahrzeugreifens ist. Der Aufstandsflächenabschnitt des Fahrzeugreifens kann auch als die Reifenaufstandsfläche, die Aufstandsfläche oder als Latsch bezeichnet sein. Der Aufstandsflächenabschnitt des Fahrzeugreifens ist der mit dem Untergrund und/oder der Straße in Kontakt stehende und/oder mit dem Untergrund/Straße kontakthaltende Abschnitt der Lauffläche des Fahrzeugreifens. Unter der zufälligen Abweichung kann insbesondere eine statistische Abweichung verstanden werden. Diese kann durch statistische Messungen vorab bestimmt sein. Der Korrekturfaktor kann basierend auf der zufälligen Abweichung vorbestimmt sein. Der Korrekturfaktor kann eine zufällige Abweichung zumindest indirekt repräsentieren. Der Bereich, in dem die Messung der Radialbeschleunigung verfälscht sein kann, ist oftmals nicht nur an der Aufstandsfläche direkt vorhanden, sondern kann auch an den daran in Umfangsrichtung angrenzenden Abschnitten erfasst werden.

Eine weitere vorteilhafte Ausgestaltung der Messvorrichtung zeichnet sich dadurch aus, dass der Korrekturfaktor in Abhängigkeit von einem Radius des Fahrzeugreifens und/oder einem radialen Abstand der Sensoreinheit von einer Drehachse des Fahrzeugreifens vorbestimmt ist. Bei der Vorbestimmung des Korrekturfaktors können also auch der zuvor genannte Radius bzw. der zuvor genannte Abstand berücksichtigt werden. Der Korrekturfaktor kann insbesondere auch in Abhängigkeit von einem Durchmesser und/oder einem Umfang des Fahrzeugreifens vorbestimmt sein. Dies sind aber von dem Radius abhängige Größen und sollen deshalb impliziert zumindest mit verstanden sein.

Eine weitere vorteilhafte Ausgestaltung der Messvorrichtung zeichnet sich dadurch aus, dass der Korrekturfaktor in Abhängigkeit von einer bzw. der Abtastrate der Sensoreinheit vorbestimmt ist. So können beispielsweise höhere Abtastraten zu einem kleineren Korrekturfaktor, oder umgekehrt, führen.

Gemäß eines zweiten Aspekts der Erfindung wird die eingangs genannte Aufgabe gelöst durch eine Vorrichtung zur Ermittlung einer Reifenlaufstrecke. Die Vorrichtung weist eine zweite Funkeinheit und eine zweite Datenverarbeitungseinheit auf. Die zweite Funkeinheit ist zum Empfang eines Funksignals einer ersten Funkeinheit einer Messvorrichtung ausgebildet, die eine innenseitig an dem verformbaren Fahrzeugreifen befestigbare Sensoreinheit aufweist, die zur Erfassung einer in Radialrichtung auf eine Lauffläche des Fahrzeugreifens wirkenden Radialbeschleunigung ausgebildet ist. Das Funksignal repräsentiert einen durch die Radialbeschleunigung bestimmten Signalwert oder einen durch einen von der Messvorrichtung basierend zumindest auf der Radialbeschleunigung ermittelten Ergebniswert bestimmten Signalwert. Die zweite Datenverarbeitungseinheit ist konfiguriert, eine Reifenlaufstrecke des Fahrzeugreifens zumindest basierend auf dem Signalwert und einem Korrekturfaktor zu ermitteln. Der Korrekturfaktor basiert auf einer vorbestimmten Abweichung der von der Sensoreinheit erfassten Radialbeschleunigung.

Der Begriff "zweite" dient zu Unterscheidungszwecken. Die Vorrichtung benötigt also keine zwei Funkeinheiten und auch keine zwei Datenverarbeitungseinheiten. Die zweite Funkeinheit ist zum Empfang des Funksignals ausgebildet. Dieses Funksignal repräsentiert einen Signalwert. Der Signalwert kann dabei durch die Radialbeschleunigung bestimmt sein, die mittels einer Messvorrichtung an der Innenseite eines verformbaren Fahrzeugreifens erfasst wurde. Es ist aber auch möglich, dass der Signalwert einen bereits basierend auf der Radialbeschleunigung ermittelten Ergebniswert repräsentiert. Dieser Ergebniswert kann dabei basierend auf der Radialbeschleunigung und einem weiteren Parametern ermittelt sein. Der Ergebniswert kann also das Resultat einer Datenvorverarbeitung sein. Diese kann beispielsweise in der Messvorrichtung ausgeführt sein. Die Messvorrichtung kann deshalb gemäß der Messvorrichtung nach dem ersten Aspekt der Erfindung ausgebildet sein. Auf die vorangegangenen Erläuterungen, bevorzugten Merkmale, Effekte und/oder Vorteile, wie sie im Zusammenhang mit der Messvorrichtung gemäß dem ersten Aspekt und/oder den dazugehörigen, vorteilhaften Ausgestaltungen erläutert worden ist, wird zumindest in analoger Weise Bezug genommen. Die Messvorrichtung gemäß dem ersten Aspekt sieht jedoch die Ermittlung des Ergebniswerts vor. Dies ist jedoch nicht für die Vorrichtung gemäß dem zweiten Aspekt unbedingt notwendig. Denn das Funksignal kann, wie zuvor erwähnt, ein Signalwert repräsentieren, der nur durch die Radialbeschleunigung bestimmt ist. Es ist deshalb besonders bevorzugt, dass der Signalwert entweder die erfasste Radialbeschleunigung oder der ermittelte Ergebniswert ist.

Mit der vorbestimmten Abweichung ist vorzugsweise eine Abweichung der erfassten Radialbeschleunigung von der tatsächlichen, mittleren, in Radialrichtung auf die Lauffläche des Fahrzeugreifens wirkenden Beschleunigung gemeint. Diese Abweichung tritt auf, wenn die Radialbeschleunigung von der Sensoreinheit dann erfasst wird, wenn sich die Sensoreinheit gegenüberliegend zu einer Bodenaufstandsfläche des Fahrzeugreifens befindet. Hier ist die Radialbeschleunigung etwa Null. Dies entspricht jedoch nicht dem tatsächlichen, gerade anliegenden, mittleren Wert der Radialbeschleunigung. Um die erfasste Radialbeschleunigung deshalb zu korrigieren, ist der Korrekturfaktor vorgesehen, der auf einer vorbestimmten Abweichung, die beispielsweise eine statistische Abweichung repräsentiert, basiert. Die Reifenlaufstrecke ist vorzugsweise die von dem Fahrzeugreifen durch Abrollen abgelaufene Strecke. Die Reifenlaufstrecke kann auch als Laufleistung bezeichnet werden. Die Radialrichtung ist vorzugsweise die Radialrichtung des Fahrzeugreifens. Die Vorrichtung bietet den Vorteil, dass eine besonders genaue und/oder verlässliche Reifenlaufstrecke ermittelt werden kann. Denn bei der Ermittlung der Reifenlaufstrecke wird der Korrekturfaktor berücksichtigt. Dieser dient zum Korrigieren der Auswirkungen der erfassten Radialbeschleunigung, die nicht bei jeder Messung dem mittleren Wert der auf den Fahrzeugreifen wirkenden Radialbeschleunigung entspricht.

Der Korrekturfaktor kann in Abhängigkeit von einem Radius des Fahrzeugreifens und/oder in Abhängigkeit von einem radialen Abstand der Sensoreinheit von einer Drehachse des Fahrzeugreifens vorbestimmt sein. Der Korrekturfaktor kann auch in Abhängigkeit von einem Durchmesser und/oder einem Umfang des Fahrzeugreifens vorbestimmt sein. Die zuvor genannten beiden Größen sind aber von dem Radius des Fahrzeugreifens abhängig, sodass die entsprechenden Abhängigkeiten in analoger Weise gelten.

Eine vorteilhafte Ausgestaltung der Vorrichtung zeichnet sich dadurch aus, dass die zweite Datenverarbeitungseinheit konfiguriert ist, den Korrekturfaktor basierend auf der Abtastrate der Sensoreinheit, der Periodendauer der Sensoreinheit und/oder einen Radius des Fahrzeugreifens zu bestimmen. Höhere Abtastraten können zu einem kleineren Korrekturfaktor führen. Der Korrekturfaktor kann von der zweiten Datenverarbeitungseinheit an den jeweiligen Fahrzeugreifen angepasst sein. Dies gilt insbesondere bezüglich der geometrischen Größen des Fahrzeugreifens und/oder der Anordnung der Sensoreinheit der Messvorrichtung, von der das Funksignal empfangen wird.

Gemäß einem dritten Aspekt der Erfindung wird die eingangs genannte Aufgabe gelöst durch ein System zur Ermittlung einer Reifenlaufstrecke mit den Merkmalen des Anspruchs 9 Gemäß einem vierten Aspekt der Erfindung wird die eingangs genannte Aufgabe gelöst durch ein Fahrzeug mit den Merkmalen des Anspruchs 10.

Gemäß einem fünften Aspekt der Erfindung wird die eingangs genannte Aufgabe gelöst durch ein Verfahren zur Ermittlung einer Reifenlaufstrecke mit den Merkmalen des Anspruchs 11.

Für den Verfahrensschritt b) wird also die Radialbeschleunigung zur Ermittlung der Reifenlaufstrecke verwendet. Da diese einer statistisch auftretenden Abweichung von einer mittleren auf die Lauffläche des Fahrzeugreifens wirkende Radialbeschleunigung unterliegt, wird für die Ermittlung der Reifenlaufstrecke außerdem der Korrekturfaktor verwendet. Dieser repräsentiert die vorbestimmte Abweichung der von der Sensoreinheit erfassten Radialbeschleunigung. Die vorbestimmte Abweichung kann vorbestimmt sein, da es mit statistischen Methoden voraussagbar ist, wie groß die Abweichung der mittels der Sensoreinheit erfassten Radialbeschleunigung von der mittleren auf die Lauffläche des Fahrzeugreifens tatsächlich wirkende Radialbeschleunigung ist. Deshalb lässt sich mittels des Verfahrens mit den Schritten a) und b) eine besonders exakte Reifenlaufstrecke ermitteln. Für das Verfahren können die Erläuterungen, vorteilhaften Merkmale, Effekte und/oder Vorteile, wie sie zu den vorangegangenen Aspekten der Erfindung erörtert worden sind, in analoger Weise gelten.

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.

Fig. 1    zeigt eine vorteilhafte Ausgestaltung der Messvorrichtung in einer schematischen Darstellung.
Fig. 2    zeigt eine vorteilhafte Ausgestaltung der Vorrichtung in einer schematischen Darstellung.
Fig. 3    zeigt eine vorteilhafte Ausgestaltung eines Fahrzeugs in einer schematischen Perspektivansicht.
Fig. 4    zeigt eine vorteilhafte Ausgestaltung eines Systems in einer schematischen Darstellung.
Fig. 5    zeigt eine vorteilhafte Ausgestaltung des Verfahrens in einer schematischen Darstellung.

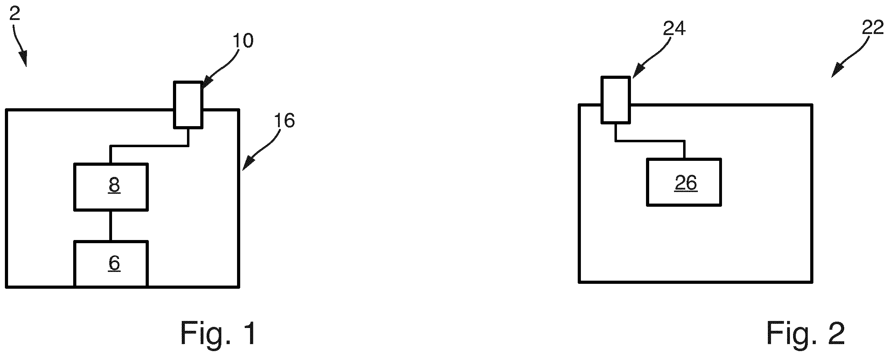

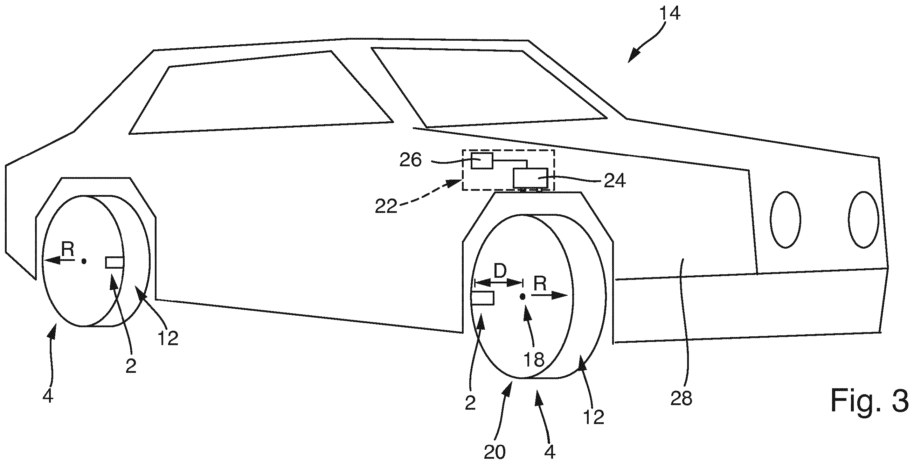

In der Figur 1 ist eine vorteilhafte Ausgestaltung einer Messvorrichtung 2 schematisch dargestellt. Die Messvorrichtung 2 dient als Messvorrichtung 2 für einen verformbaren Fahrzeugreifen 4. In diesem Zusammenhang wird auf die Figur 3 verwiesen, in der eine vorteilhafte Ausgestaltung eines Fahrzeugs 14 schematisch dargestellt ist. Das Fahrzeug 14 weist mehrere verformbare Fahrzeugreifen 4 auf.

Die Messvorrichtung 2 weist eine Sensoreinheit 6, eine erste Datenverarbeitungseinheit 8, und eine erste Funkeinheit 10 auf. Die Sensoreinheit 6 der Messvorrichtung 2 ist innenseitig an einem Fahrzeugreifen 4 derart befestigbar ausgebildet, sodass eine in Radialrichtung R auf eine Lauffläche 12 des Fahrzeugreifens 4 wirkende Radialbeschleunigung mittels der Sensoreinheit 6 erfassbar ist. In der Figur 3 ist für jeden Fahrzeugreifen 4 eine derartige Messvorrichtung 2 vorgesehen und schematisch dargestellt. Die Messvorrichtung 2 ist vorzugsweise an der Innenseite des Fahrzeugreifens 4 angeordnet und/oder befestigt, sodass die Sensoreinheit 6 der Messvorrichtung 2 innenseitig an den Fahrzeugreifen 4 derart befestigt ist, um die in Radialrichtung R auf die zugehörige Lauffläche 12 des jeweiligen Fahrzeugreifens 4 wirkende Radialbeschleunigung zu erfassen.

Wie aus der Figur 1 beispielhaft hervorgeht, kann die Messvorrichtung 2 ein Gehäuse 16 aufweisen, wobei die erste Datenverarbeitungseinheit 8 innerhalb des Gehäuses 16 angeordnet ist. Außerdem ist es bevorzugt vorgesehen, dass die Sensoreinheit 6 vollständig oder zumindest teilweise in dem Gehäuse 16 angeordnet ist. Auch die erste Funkeinheit 10 ist vorstellig oder zumindest teilweise innerhalb des Gehäuses 16 angeordnet. Die Messvorrichtung 2 kann deshalb als eine handhabbare Messvorrichtung 2 ausgebildet sein. Mittels des Gehäuses 16 kann die Messvorrichtung 2 an der Reifeninnenseite des Fahrzeugreifens 4 befestigt sein.

Die erste Datenverarbeitungseinheit 8 der Messvorrichtung 2 ist konfiguriert, einen für eine Reifenlaufstrecke des Fahrzeugreifens 4 relevanten Ergebniswert zumindest basierend auf der Radialbeschleunigung und mindestens einem vorbestimmten Reifenparameter des Fahrzeugreifens 4 zu ermitteln. Die Reifenlaufstrecke ist vorzugsweise die von dem Fahrzeugreifen 4 durch Abrollen auf einem Untergrund abgelaufene Strecke.

Mittels der ersten Datenverarbeitungseinheit 8 wird der Ergebniswert basierend auf der Radialbeschleunigung und mindestens einem vorbestimmten Reifenparameter ermittelt. Als vorbestimmter Reifenparameter kann einer der folgenden Parameter des Fahrzeugreifens 4 verwendet werden: dynamischer Rollradius des Fahrzeugreifens 4, normierter Rollradius des Fahrzeugreifens 4, radialer Abstand D der Sensoreinheit 6 von einer Drehachse 18 des Fahrzeugreifens 4, normierter radialer Abstand der Sensoreinheit 6 von der Drehachse 18 des Fahrzeugreifens 4, Abtastrate der Sensoreinheit 6, Periodendauer der Sensoreinheit 6, und vorbestimmter Korrekturfaktor für den Fahrzeugreifen 4. Jeder der zuvor genannten Parameter kann eine Eigenschaft des Fahrzeugreifens 4 charakterisieren. Jeder der zuvor genannten Parameter kann deshalb einen Reifenparameter des Fahrzeugreifens 4 bilden. Derartige Reifenparameter können auch vorbestimmt sein. Dies kann durch Messungen und/oder durch statistische Messmethoden erfolgen. Der dynamische Rollradius des Fahrzeugreifens 4 entspricht vorzugsweise dem effektiven Rollradius des Fahrzeugreifens 4. Der normierte Rollradius des Fahrzeugreifens 4 kann dabei dem auf den radialen Abstand der Sensoreinheit 6 von der Drehachse 18 normierten, dynamischen Rollradius des Fahrzeugreifens 4 entsprechen. Anstatt des zuvor genannten radialen Abstands der Sensoreinheit 6 kann auch ein anderer Wert des Fahrzeugreifens 4 zur Normalisierung verwendet werden.

Hierzu bietet sich beispielsweise der mittlere Radius des Fahrzeugreifens 4 oder beispielsweise der Durchmesser des Fahrzeugreifens 4 an. Die Periodendauer der Sensoreinheit 6 ist vorzugsweise umgekehrt proportional zur Abtastrate der Sensoreinheit 6. Bei der Verwendung der Messvorrichtung 2 kann es vorkommen, dass die zugehörige Sensoreinheit 6 nicht die tatsächliche, mittlere Beschleunigung in Radialrichtung R erfasst, die auf die Lauffläche 12 des Fahrzeugreifens 4 wirkt. Insbesondere kann es vorkommen, dass die Sensoreinheit 6 bei der Erfassung der Radialbeschleunigung innenseitig gegenüberliegend zu einem Aufstandsflächenabschnitt 20 in dem Fahrzeugreifen 4 ist.

Die in diesem Zustand erfasste Radialbeschleunigung ist annähernd Null. Jedoch erfährt die übrige Lauffläche 12 bei einer Rotation des Fahrzeugreifens 4 eine hiervon abweichende Radialbeschleunigung. Die erfasste Radialbeschleunigung weicht also von der mittleren, auf die Lauffläche 12 wirkenden Radialbeschleunigung ab. Eine derartige Erfassung einer "verfälschten" Radialbeschleunigung hat jedoch Einfluss auf die Berechnung einer Reifenlaufstrecke für die Fahrzeugreifen 4.

Es hat sich deshalb als vorteilhaft herausgestellt, wenn die erste Datenverarbeitungseinheit 8 dazu konfiguriert ist, den Ergebniswert zumindest basierend auf der tatsächlich erfassten Radialbeschleunigung und mindestens einem vorbestimmten Reifenparameter des Fahrzeugreifens 4 zu ermitteln. Dabei kann beispielsweise der dynamische oder normierte Rollradius des Fahrzeugreifens 4 und/oder der radiale Abstand D der Sensoreinheit 6 von der Drehachse 18 des Fahrzeugreifens 4 berücksichtigt werden. Der so ermittelte Ergebniswert kann sodann eine Eigenschaft des Fahrzeugreifens 4 charakterisieren und mittels eines Funksignals, das diesen ermittelten Ergebniswert repräsentiert, durch die erste Funkeinheit 10 versendet werden.

In Abhängigkeit bei der Ermittlung des Ergebniswerts neben der Radialbeschleunigung berücksichtigten Reifenparameter ist es möglich, dass der Ergebniswert beispielsweise die Reifenwinkelgeschwindigkeit des Fahrzeugreifens 4, die translatorische Reifengeschwindigkeit des Fahrzeugreifens 4, oder eine Messstrecke des Fahrzeugreifens 4 ist. Wird das Funksignal, das den entsprechenden Ergebniswert repräsentiert, mittels der ersten Funkeinheit 10 versendet, so kann dieses Funksignal von einer Vorrichtung 22, wie sie beispielhaft und schematisch in der Figur 2 dargestellt ist, empfangen werden. Die Vorrichtung 22 weist eine zweite Funkeinheit 24 und eine zweite Datenverarbeitungseinheit 26 auf. Die zweite Funkeinheit 24 ist zum Empfang des bzw. eines Funksignals ausgebildet. Das Funksignal kann dabei das Funksignal der Messvorrichtung 2 sein, wie es zuvor in Verbindung mit den Figuren 1 und 3 erläutert worden ist. In diesem Fall repräsentiert das Funksignal einen von der ersten Datenverarbeitungseinheit 8 der Messvorrichtung 2 ermittelten Ergebniswert. Dieser wird auch als Signalwert bezeichnet, wenn das Funksignal von der zweiten Funkeinheit 24 der Vorrichtung 22 empfangen wird. Denn es ist auch möglich, dass ein Funksignal von der zweiten Funkeinheit 24 empfangen, das nicht von einer Messvorrichtung 2 stammt, wie beispielhaft in der Figur 1 dargestellt ist, sondern von einer anderen Messvorrichtung 2, die den Ergebniswert ausschließlich basierend auf der Radialbeschleunigung ermittelt und somit das Funksignal beispielsweise ausschließlich die Radialbeschleunigung repräsentiert. Es ist deshalb möglich, dass das von der zweiten Funkeinheit 24 der Vorrichtung 22 empfangene Funksignal einen durch die auf einen Fahrzeugreifen wirkende Radialbeschleunigung bestimmten Signalwert repräsentiert.

Die zweite Datenverarbeitungseinheit 26 der Vorrichtung 22 ist dazu konfiguriert, eine Reifenlaufstrecke des Fahrzeugreifens 4 zumindest basierend auf dem Signalwert, der von dem Funksignal repräsentiert ist, und einem Korrekturfaktor zu ermitteln, wobei der Korrekturfaktor auf einer vorbestimmten Abweichung der von der Sensoreinheit 6 erfassten Radialbeschleunigung basiert. Die Sensoreinheit 6 kann hierbei die Sensoreinheit 6 der Messvorrichtung 2 sein, wie sie beispielsweise im Zusammenhang mit der Figur 1 erläutert worden ist. Es ist aber möglich, dass es sich hierbei um eine Sensoreinheit 6 zur Erfassung einer Radialbeschleunigung einer anderen Messvorrichtung 2 handelt, wobei diese Messvorrichtung 2 eine Funkeinheit aufweist, die zum Senden eines Funksignals ausgebildet ist, das die erfasste Radialbeschleunigung repräsentiert.

Durch die Berücksichtigung des Korrekturfaktors bei der Ermittlung der Reifenlaufstrecke des Fahrzeugreifens 4 kann gewährleistet werden, dass der Einfluss einer Abweichung der erfassten Radialbeschleunigung des Fahrzeugreifens 4 von der tatsächlichen, mittleren, in Radialrichtung R auf die Lauffläche 12 des Fahrzeugreifens 4 wirkenden Beschleunigung ausgeglichen werden kann. Der Korrekturfaktor kann dabei auf einer zufälligen Abweichung der erfassten Radialbeschleunigung von einer tatsächlichen, mittleren, in Radialrichtung R auf die Lauffläche 12 wirkenden Beschleunigung basieren. Der Korrekturfaktor kann deshalb durch statistische Auswertung der erfassten Abweichung der erfassten Radialbeschleunigung bei vorherigen Testuntersuchungen bestimmt sein.

In der Praxis wurde festgestellt, dass die Abweichungen auch von der Abtastrate bzw. von der Periodendauer der Sensoreinheit 6 abhängen können. Eine besonders hohe Abtastrate könne dabei gewährleisten, dass die tatsächlich auf die Lauffläche 12 des Fahrzeugreifens 4 wirkende Radialbeschleunigung präzise erfassbar ist. Allerdings benötigt dies eine große elektrische Leistung, was jedoch zu vermeiden ist. Es ist deshalb bevorzugt vorgesehen, dass die Sensoreinheit 6 zur Erfassung der Radialbeschleunigung mit einer Abtastrate von höchstens 1/8 Hz, 1/16 Hz, 1/32 Hz, 1/64 Hz oder 1/128 Hz ausgebildet ist. Dies gewährleistet, dass die Radialbeschleunigung nicht zu häufig abgetastet wird, sodass die Leistungsaufnahme der Messvorrichtung 2 durch das Abtasten der Radialbeschleunigung vorteilhaft begrenzt ist. Dadurch kann allerdings ein Fehler bei der Erfassung der mittleren Radialbeschleunigung bzw. eine Abweichung bei der tatsächlich Erfassten Radialbeschleunigung mittels der Sensoreinheit 6 im Verhältnis zu der mittleren, tatsächlich vorhandenen Radialbeschleunigung auf den Fahrzeugreifen 4 auftreten. In der Praxis wurde jedoch durch statistische Untersuchungen ermittelt, dass dieser Fehler bei der zuvor genannten Abtastungsrate durch einen Korrekturfaktor zumindest im Wesentlichen wieder ausgleichbar ist. Dieser wird deshalb auch bei der Erfassung der Reifenlaufstrecke berücksichtig. Es hat sich deshalb darüber hinaus als vorteilhaft herausgestellt, wenn der Korrekturfaktor in Abhängigkeit von einem Radius des Fahrzeugreifens 4 und/oder in Abhängigkeit von einem radialen Abstand D der Sensoreinheit 6 der Messvorrichtung 2 von einer Drehachse 18 des Fahrzeugreifens 4 vorbestimmt ist. Weiterhin hat es sich als vorteilhaft herausgestellt, wenn der Korrekturfaktor in Abhängigkeit von einer bzw. der Abtastrate der Sensoreinheit 6 vorbestimmt ist.

In der Praxis hat es sich als vorteilhaft herausgestellt, wenn die Vorrichtung 22 als eine stationäre Vorrichtung 22 oder als eine mobile Vorrichtung 22 ausgebildet ist. Die Vorrichtung 22 kann deshalb beispielsweise als eine stationär installierte Vorrichtung ausgebildet sein. Es ist jedoch auch möglich, dass die Vorrichtung 22 von einem mobilen, handhabbaren Computer, wie beispielsweise einem Mobiltelefon oder einem Tablet-Computer, ausgebildet ist. Die zweite Funkeinheit 24 kann sodann beispielsweise als eine Bluetooth-Funkeinheit ausgebildet sein. Damit die zweite Funkeinheit 24 in diesem Fall mit der ersten Funkeinheit 10 der Messvorrichtung 2 kommunizieren kann, um das Funksignal auszutauschen, hat es sich ebenfalls als vorteilhaft herausgestellt, wenn die erste Funkeinheit 10 ebenfalls als eine Bluetooth-Funkeinheit ausgebildet ist. Grundsätzlich können jedoch auch andere Übertragungsstandards und/oder proprietäre Funkmethoden zur Übertragung des Funksignals verwendet werden.

Eine weitere vorteilhafte Anordnung der Vorrichtung 22 ist in der Figur 3 schematisch dargestellt. Dabei ist die Vorrichtung 22 der Karosserie 28 des Kraftfahrzeugs 14 zugeordnet. Die zweite Datenverarbeitungseinheit 26 kann dabei mit einer Steuereinheit (nicht dargestellt) des Fahrzeugs 14 gekoppelt sein, um die ermittelte Reifenlaufstrecke an die Steuereinheit des Kraftfahrzeugs 14 zu übertragen.

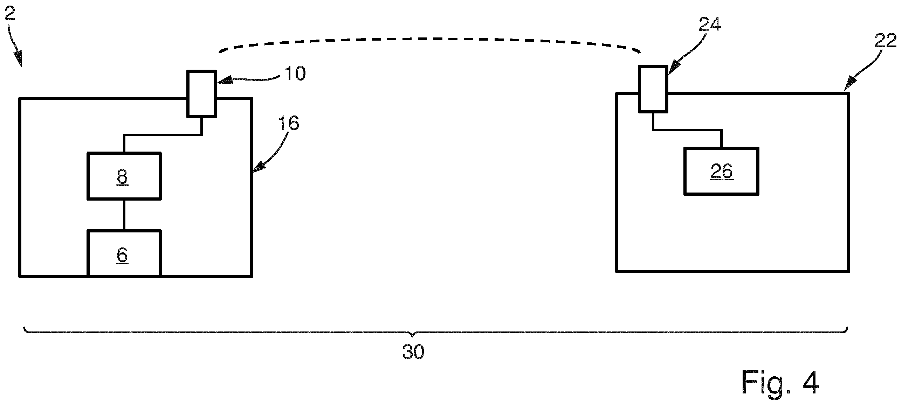

Eine weitere vorteilhafte Ausgestaltung einer Kombination der Messvorrichtung 2 und der Vorrichtung 22 ist in der Figur 4 schematisch dargestellt. Die Messvorrichtung 2 und die Vorrichtung 22 bilden in diesem Fall ein System 30. Darüber hinaus ist die Übertragung des Funksignals durch die gestrichelte Linie zwischen der ersten Funkeinheit 10 und der zweiten Funkeinheit 24 schematisch angedeutet.

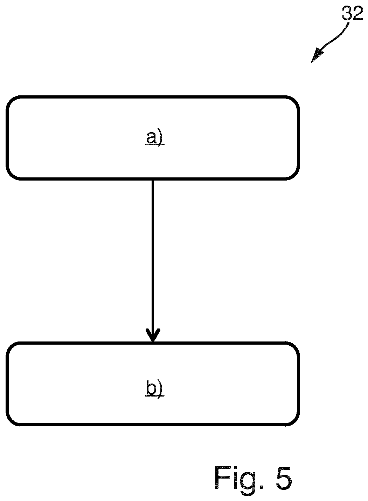

In der Figur 5 ist das Verfahren 32 schematisch dargestellt. Das Verfahren 30 weist einen ersten Verfahrensschritt a) und einen zweiten Verfahrensschritt b) auf. Der Verfahrensschritt b) folgt auf den Verfahrensschritt a). Es ist jedoch grundsätzlich möglich, dass zwischen dem ersten Verfahrensschritt a) und dem zweiten Verfahrensschritt b) noch weitere Zwischenschritte ausgeführt werden. Außerdem können an den Verfahrensschritt b) noch weitere Verfahrensschritte anschließen.

In Schritt a) erfolgt ein Erfassen einer in Radialrichtung R auf eine Lauffläche 12 eines Fahrzeugreifens 4 wirkenden Radialbeschleunigung mit einer Sensoreinheit 6, die innenseitig an einem verformbaren Fahrzeugreifen 4 angeordnet ist. In dem Schritt b) erfolgt ein Ermitteln einer Reifenlaufstrecke des Fahrzeugreifens 4 zumindest basierend auf der Radialbeschleunigung und einem Korrekturfaktor mittels einer Datenverarbeitungs-einheit 26, wobei der Korrekturfaktor auf einer vorbestimmten Abweichung der von der Sensoreinheit 6 erfassten Radialbeschleunigung basiert. Die Datenverarbeitungseinheit ist vorzugsweise die zweite Datenverarbeitungseinheit 26 einer Vorrichtung 22. Die Sensoreinheit 6 ist vorzugsweise die Sensoreinheit 6 einer Messvorrichtung 2. Für das Verfahren wird auf die vorangegangenen Erläuterungen, bevorzugten Merkmale, Effekte und/oder Vorteile, wie sie im Zusammenhang mit der Messvorrichtung 2, der Vorrichtung 22, dem Fahrzeug 14 und/oder dem System 30 erläutert worden sind, zumindest in analoger Weise Bezug genommen.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

**Bezugszeichenliste**

R     Radialrichtung
D     Abstand
2     Messvorrichtung
4     Fahrzeugreifen
6     Sensoreinheit
8     erste Datenverarbeitungseinheit
10    erste Funkeinheit
12    Lauffläche
14    Fahrzeug
16    Gehäuse
18    Drehachse
20    Aufstandsflächenabschnitt
22    Vorrichtung
24    zweite Funkeinheit

26    zweite Datenverarbeitungseinheit
28    Karosserie
30    System
32    Verfahren

**Patentansprüche**

1. Messvorrichtung (2) für einen verformbaren Fahrzeugreifen (4), aufweisend:

   eine Sensoreinheit (6),
   eine erste Datenverarbeitungseinheit (8), und
   eine erste Funkeinheit (10),
   wobei die Sensoreinheit (6) innenseitig an dem Fahrzeugreifen (4) derart befestigbar ausgebildet ist, so dass eine in Radialrichtung (R) auf eine Lauffläche (12) des Fahrzeugreifens (4) wirkende Radialbeschleunigung mittels der Sensoreinheit (6) erfassbar ist;
   wobei die erste Datenverarbeitungseinheit (8) konfiguriert ist, einen für eine Reifenlaufstrecke des Fahrzeugreifens (4) relevanten Ergebniswert zumindest basierend auf der Radialbeschleunigung und mindestens einem vorbestimmten Reifenparameter des Fahrzeugreifens (4) zu ermitteln;
   wobei jeder Reifenparameter eine Eigenschaft des Fahrzeugreifens (4) charakterisiert; und
   wobei die erste Funkeinheit (10) zum Senden eines Funksignals ausgebildet ist, das den ermittelten Ergebniswert repräsentiert, wobei der Ergebniswert eine Reifenlaufstrecke des Fahrzeugreifens (4) ist, wobei die Reifenparameter zumindest von dem normierten radialen Abstand der Sensoreinheit (6) von der Drehachse (18) des Fahrzeugreifens (4), von dem normierten Rollradius des Fahrzeugreifens (4) und von einem vorbestimmten Korrekturfaktor für den Fahrzeugreifen gebildet sind, wobei der Korrekturfaktor auf einer vorbestimmten Abweichung der von der Sensoreinheit (6) erfassten Radialbeschleunigung basiert, **dadurch gekennzeichnet, dass** der Korrekturfaktor in Abhängigkeit von einer bzw. der Abtastrate der Sensoreinheit (6) vorbestimmt ist.

2. Messvorrichtung (2) nach dem vorhergehenden Anspruch, **dadurch gekennzeichnet, dass** mindestens einer der folgenden Parameter einen bzw. einen der Reifenparameter bildet: dynamischer Rollradius des Fahrzeugreifens (4), normierter Rollradius des Fahrzeugreifens (4), radialer Abstand (D) der Sensoreinheit (6) von einer Drehachse (18) des Fahrzeugreifens (4), normierter radialer Abstand (D) der Sensoreinheit (6) von der Drehachse (18) des Fahrzeugreifens (4), Abtastrate der Sensoreinheit (6), Periodendauer der Sensoreinheit (6), und vorbestimmter Korrekturfaktor für den Fahrzeugreifen (4).

3. Messvorrichtung (2) nach einem der vorhergehenden Ansprüche, **dadurch gekennzeichnet, dass** die Sensoreinheit (6) zur Erfassung der Radialbeschleunigung mit einer Abtastrate von höchstens 1/8 Hz, 1/16 Hz, 1/32 Hz, 1/64 Hz oder 1/128 Hz ausgebildet ist.

4. Messvorrichtung (2) nach einem der vorhergehenden Ansprüche, **dadurch gekennzeichnet, dass** der Ergebniswert eine Reifenwinkelgeschwindigkeit des Fahrzeugreifens (4) ist, wobei der oder einer der Reifenparameter von dem normierten radialen Abstand der Sensoreinheit (6) von der Drehachse (18) des Fahrzeugreifens (4) gebildet ist.

5. Messvorrichtung (2) nach einem der vorhergehenden Ansprüche 1 bis 3, **dadurch gekennzeichnet, dass** der Ergebniswert eine translatorische Reifengeschwindigkeit des Fahrzeugreifens (4) ist, wobei die Reifenparameter zumindest von dem normierten radialen Abstand der Sensoreinheit (6) von der Drehachse (18) des Fahrzeugreifens (4) und von dem normierten Rollradius des Fahrzeugreifens (4) gebildet sind.

6. Messvorrichtung (2) nach einem der vorhergehenden Ansprüche 1 bis 3, **dadurch gekennzeichnet, dass** der Ergebniswert eine Messstrecke des Fahrzeugreifens (4) ist, wobei die Reifenparameter zumindest von dem normierten radialen Abstand der Sensoreinheit (6) von der Drehachse (18) des Fahrzeugreifens (4) und von dem normierter Rollradius des Fahrzeugreifens (4) gebildet sind.

7. Messvorrichtung (2) nach Anspruch 1, **dadurch gekennzeichnet, dass** sich die erfasste Radialbeschleunigung auf eine mittlere, in Radialrichtung (R) auf die Lauffläche (12) wirkende Beschleunigung bezieht, wobei der Korrekturfaktor auf der zufälligen Abweichung der erfassten Radialbeschleunigung von einer tatsächlichen, mittleren, in Radialrichtung (R) auf die Lauffläche (12) wirkenden Beschleunigung basiert, und wobei die Abweichung auftritt, wenn die Sensoreinheit (6) bei der Erfassung der Radialbeschleunigung innenseitig gegenüberliegend zu einem Aufstandsflächenabschnitt (20) des Fahrzeugreifens (4) ist.

8. Messvorrichtung (2) nach einem der vorhergehenden Ansprüche 1 oder 7, **dadurch gekennzeichnet, dass** der Korrekturfaktor in Abhängigkeit von einem Radius des Fahrzeugreifens (4) und/oder einem radialen Abstand (D) der Sensoreinheit (6) von einer Drehachse (18) des Fahrzeugreifens (4) vorbestimmt ist.

9. System (30) zur Ermittlung einer Reifenlaufstrecke, aufweisend: eine Messvorrichtung (2) nach einem der vorhergehenden Ansprüche 1 bis 8, wobei die erste Funkeinheit (10) der Messvorrichtung (2) ausgebildet ist, das Funksignal an die zweite Funkeinheit (24) der Vorrichtung (22) zu senden und die zweite Funkeinheit (24) zum Empfang dieses Funksignals ausgebildet ist.

10. Fahrzeug (14), aufweisend: mehrere verformbare Fahrzeugreifen (4), und ein System (30) nach dem vorhergehenden Anspruch, wobei die Sensoreinheit (6) der Messvorrichtung (2) an der Innenseite einer der Fahrzeugreifen (4) derart angeordnet ist, so dass eine in Radialrichtung (R) auf eine Lauffläche (12) dieses Fahrzeugreifens (4) wirkenden Radialbeschleunigung mittels der Sensoreinheit (6) erfassbar ist.

11. Verfahren (32) zur Ermittlung einer Reifenlaufstrecke, aufweisend die Schritte:

a) Bereitstellen eines Systems (30) zur Ermittlung einer Reifenlaufstrecke nach Anspruch 9 - und Erfassen einer in Radialrichtung (R) auf eine Lauffläche (12) des Fahrzeugreifens (4) wirkenden Radialbeschleunigung mittels einer Sensoreinheit (6), die innenseitig an einem verformbaren Fahrzeugreifen (4) angeordnet ist; und
b) Ermitteln einer Reifenlaufstrecke des Fahrzeugreifens (4) zumindest basierend auf der Radialbeschleunigung und einem Korrekturfaktor mittels einer Datenverarbeitungseinheit, wobei der Korrekturfaktor auf einer vorbestimmten Abweichung der von der Sensoreinheit (6) erfassten Radialbeschleunigung basiert.

**Claims**

1. Measuring device (2) for a deformable vehicle tyre (4), having:

a sensor unit (6),
a first data processing unit (8), and
a first radio unit (10),
wherein the sensor unit (6) is designed to be fastenable to the inside of the vehicle tyre (4) such that a radial acceleration acting in a radial direction (R) on a tread (12) of the vehicle tyre (4) can be detected by means of the sensor unit (6);
wherein the first data processing unit (8) is configured to determine a result value, relevant for a tyre mileage of the vehicle tyre (4), at least on the basis of the radial acceleration and at least one predetermined tyre parameter of the vehicle tyre (4); wherein each tyre parameter characterizes a property of the vehicle tyre (4); and wherein the first radio unit (10) is designed to transmit a radio signal which represents the determined result value, wherein the result value is a tyre mileage of the vehicle tyre (4), wherein the tyre parameters are formed at least by the standardized radial distance of the sensor unit (6) from the rotational axis (18) of the vehicle tyre (4), by the standardized rolling radius of the vehicle tyre (4) and by a predefined correction factor for the vehicle tyre, wherein the correction factor is based on a predefined deviation of the radial acceleration detected by the sensor unit (6), **characterized in that** the correction factor is predetermined as a function of a or the sampling rate of the sensor unit (6).

2. Measuring device (2) according to the preceding claim, **characterized in that** at least one of the following parameters forms a tyre parameter or one of the tyre parameters: dynamic rolling radius of the vehicle tyre (4), standardized rolling radius of the vehicle tyre (4), radial distance (D) of the sensor unit (6) from a rotational axis (18) of the vehicle tyre (4), standardized radial distance (D) of the sensor unit (6) from the rotational axis (18) of the vehicle tyre (4), sampling rate of the sensor unit (6), period length of the sensor unit (6), and predetermined correction factor for the vehicle tyre (4).

3. Measuring device (2) according to one of the preceding claims, **characterized in that** the sensor unit (6) is designed to detect the radial acceleration with a sampling rate of at most 1/8 Hz, 1/16 Hz, 1/32 Hz, 1/64 Hz or 1/128 Hz.

4. Measuring device (2) according to one of the preceding claims, **characterized in that** the result value is an angular tyre speed of the vehicle tyre (4), wherein the tyre parameter or one of the tyre parameters is formed by the standardized radial distance of the sensor unit (6) from the rotational axis (18) of the vehicle tyre (4).

5. Measuring device (2) according to one of the preceding Claims 1 to 3, **characterized in that** the result value is a translatory tyre speed of the vehicle tyre (4), wherein the tyre parameters are formed at least by the standardized radial distance of the sensor unit (6) from the rotational axis (18) of the vehicle tyre (4) and by the standardized rolling radius of the vehicle tyre (4).

6. Measuring device (2) according to one of the preceding Claims 1 to 3, **characterized in that** the result value is a measuring distance of the vehicle tyre (4), wherein the tyre parameters are formed at least by the standardized radial distance of the sensor unit (6) from the rotational axis (18) of the vehicle tyre (4) and by the standardized rolling radius of the vehicle tyre (4).

7. Measuring device (2) according to Claim 1, **characterized in that** the detected radial acceleration refers to an average acceleration acting in a radial direction (R) on the tread (12), wherein the correction factor is based on the random deviation of the detected radial acceleration from an actual average acceleration acting in a radial direction (R) on the tread (12), and wherein the deviation occurs if during the detection of the radial acceleration the sensor unit (6) is on the inside opposite a contact area portion (20) of the vehicle tyre (4).

8. Measuring device (2) according to one of the preceding Claims 1 or 7, **characterized in that** the correction factor is predetermined as a function of a radius of the vehicle tyre (4) and/or a radial distance (D) of the sensor unit (6) from a rotational axis (18) of the vehicle tyre (4).

9. System (30) for determining a tyre mileage having: a measuring device (2) according to one of the preceding Claims 1 to 8, wherein the first radio unit (10) of the measuring device (2) is designed to transmit the radio signal to the second radio unit (24) of the device (22), and the second radio unit (24) is designed to receive this radio signal.

10. Vehicle (14), having: a plurality of deformable vehicle tyres (4), and a system (30) according to the preceding claim, wherein the sensor unit (6) of the measuring device (2) is arranged on the inner side of one of the vehicle tyres (4) in such a way that a radial acceleration acting in a radial direction (R) on a tread (12) of this vehicle tyre (4) can be detected by means of the sensor unit (6).

11. Method (32) for determining a tyre mileage, having the steps:

    a) providing a system (30) for determining a tyre mileage according to Claim 9 and detecting a radial acceleration acting in a radial direction (R) on a tread (12) of the vehicle tyre (4) by means of a sensor unit (6) which is arranged on the inside of a deformable vehicle tyre (4); and
    b) determining a tyre mileage of the vehicle tyre (4) at least on the basis of the radial acceleration and a correction factor by means of a data processing unit, wherein the correction factor is based on a predetermined deviation of the radial acceleration detected by the sensor unit (6).

**Revendications**

1. Dispositif de mesure (2) pour un pneumatique déformable (4) de véhicule, comprenant :

    une unité de détection (6),
    une première unité (8) de traitement de données, et
    une première unité radio (10),
    l'unité de détection (6) étant conçue de manière à être apte à être fixée sur le côté intérieur du pneumatique de véhicule (4) de telle sorte qu'une accélération radiale agissant dans la direction radiale (R) sur une surface de roulement (12) du pneumatique de véhicule (4) puisse être détectée au moyen de l'unité de détection (6) ;
    la première unité (8) de traitement de données étant configurée pour déterminer une valeur de résultat pertinente pour une distance de roulement du pneumatique de véhicule (4) au moins sur la base de l'accélération radiale et d'au moins un paramètre de pneumatique prédéterminé du pneumatique de véhicule (4) ;
    chaque paramètre de pneumatique caractérisant une propriété du pneumatique de véhicule (4) ; et
    la première unité radio (10) étant conçue pour émettre un signal radio qui représente la valeur de résultat déterminée, la valeur de résultat étant une distance de roulement du pneumatique (4) du véhicule, les paramètres du pneumatique dépendant au moins de la distance radiale normalisée de l'unité de détection (6) par rapport à l'axe de rotation (18) du pneumatique (4) du véhicule, du rayon de roulement normalisé du pneumatique de véhicule (4) et d'un facteur de correction prédéterminé pour le pneumatique de véhicule, le facteur de correction étant basé sur un écart prédéterminé de l'accélération radiale détectée par l'unité de détection (6), **caractérisé en ce que** le facteur de correction est déterminé en fonction d'une, ou de la, fréquence d'échantillonnage de l'unité de détection (6).

2. Dispositif de mesure (2) selon la revendication précédente, **caractérisé en ce qu'**au moins l'un des paramètres suivants constitue l'un, respectivement l'autre, des paramètres du pneumatique : rayon de roulement dynamique du pneumatique (4) du véhicule, rayon de roulement normalisé du pneumatique (4) du véhicule, distance radiale (D) de l'unité de détection (6) par rapport à un axe de rotation (18) du pneumatique (4) du véhicule, distance radiale normalisée (D) de l'unité de détection (6) par rapport à l'axe de rotation (18) du pneumatique (4) du véhicule, fréquence d'échantillonnage de l'unité de détection (6), période de l'unité de détection (6), et facteur de correction prédéterminé pour le pneumatique (4) du véhicule.

3. Dispositif de mesure (2) selon l'une des revendications précédentes, **caractérisé en ce que** l'unité de détection (6) est conçue pour détecter l'accélération radiale avec une fréquence d'échantillonnage d'au plus 1/8 Hz, 1/16 Hz, 1/32 Hz, 1/64 Hz ou 1/128 Hz.

4. Dispositif de mesure (2) selon l'une des revendications précédentes, **caractérisé en ce que** la valeur de résultat est une vitesse angulaire du pneumatique (4) du véhicule, le ou l'un des paramètres du pneumatique étant formé par la distance radiale normalisée de l'unité de détection (6) par rapport à l'axe de rotation (18) du pneumatique (4) du véhicule.

5. Dispositif de mesure (2) selon l'une des revendications précédentes 1 à 3, **caractérisé en ce que** la valeur de résultat est une vitesse de translation du pneumatique (4) du véhicule, les paramètres du pneumatique étant formés au moins par la distance radiale normalisée de l'unité de détection (6) à l'axe de rotation (18) du pneumatique (4) du véhicule et par le rayon de roulement normalisé du pneumatique (4) du véhicule.

6. Dispositif de mesure (2) selon l'une des revendications précédentes 1 à 3, **caractérisé en ce que** la valeur de résultat est une distance de mesure du pneumatique (4) du véhicule, les paramètres du pneumatique étant formés au moins par la distance radiale normalisée de l'unité de détection (6) à l'axe de rotation (18) du pneumatique (4) du véhicule et par le rayon de roulement normalisé du pneumatique (4) du véhicule.

7. Dispositif de mesure (2) selon la revendication 1, **caractérisé en ce que** l'accélération radiale détectée se réfère à une accélération moyenne agissant sur la surface de roulement (12) dans la direction radiale (R), le facteur de correction étant basé sur l'écart aléatoire de l'accélération radiale détectée par rapport à une accélération radiale moyenne réelle agissant sur la bande de roulement (12) dans la direction radiale (R), et dans lequel l'écart se produit lorsque l'unité de détection (6) se trouve à l'intérieur, à l'opposé d'une partie de surface de contact (20) du pneumatique de véhicule (4) lors de la détection de l'accélération radiale.

8. Dispositif de mesure (2) selon l'une des revendications précédentes 1 ou 7, **caractérisé en ce que** le facteur de correction est prédéterminé en fonction d'un rayon du pneumatique (4) du véhicule et/ou d'une distance radiale (D) de l'unité de détection (6) par rapport à un axe de rotation (18) du pneumatique (4) du véhicule.

9. Système (30) de détermination d'une distance de roulement d'un pneumatique, comprenant : un dispositif de mesure (2) selon l'une des revendications précédentes 1 à 8, dans lequel la première unité radio (10) du dispositif de mesure (2) est adaptée pour émettre le signal radio vers la deuxième unité radio (24) du dispositif (22), et la deuxième unité radio (24) est configurée pour recevoir ce signal radio.

10. Véhicule (14) comprenant : plusieurs pneumatiques déformables (4) de véhicule, et un système (30) selon la revendication précédente, l'unité de détection (6) du dispositif de mesure (2) étant disposée sur le côté intérieur de l'un des pneumatiques (4) de véhicule de telle sorte qu'une accélération radiale agissant dans la direction radiale (R) sur une surface de roulement (12) de ce pneumatique (4) de véhicule soit apte à être détectée au moyen de l'unité de détection (6).

11. Procédé (32) de détermination de la distance de roulement d'un pneumatique, comprenant les étapes suivantes :

a) fournir un système (30) pour déterminer une distance de roulement du pneumatique selon la revendication 9, et détecter une accélération radiale agissant dans la direction radiale (R) sur une surface de roulement (12) du pneumatique (4) du véhicule au moyen d'une unité de détection (6) qui est agencée sur le côté intérieur d'un pneumatique déformable (4) du véhicule ; et

b) déterminer une distance de roulement du pneumatique de véhicule (4) au moins sur la base de l'accélération radiale et d'un facteur de correction au moyen d'une unité de traitement de données, le facteur de correction étant basé sur un écart prédéterminé de l'accélération radiale détectée par l'unité de détection (6).

Fig. 1

Fig. 2

Fig. 3

Fig. 4

Fig. 5

**EP 3 840 965 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014107946 A1
- US 20070182531 A1
- US 20130166140 A1
- WO 2012020166 A1